# EUROPEAN PATENT APPLICATION

(11) **EP 4 819 673 A1**
(43) Date of publication of application: **07.10.2026**
(21) Application number: 25844567.5
(22) Date of filing: 30.04.2025
(51) Int. Cl.: H04W 24/04, H04L 61/4511, H04W 4/00, H04W 40/02, H04W 40/24, H04W 60/00, H04W 76/10, H04W 84/10

(54) **WIRELESS COMMUNICATION SYSTEM AND COMMUNICATION METHOD**

(30) Priority: 24.07.2024 JP 2024118877
(71) Applicant: Icom Incorporated, Osaka 547-0004 (JP)
(72) Inventor: NAKANO, Akira, Osaka-shi, Osaka 547-0004 (JP); TOMITA, Takuji, Osaka-shi, Osaka 547-0004 (JP); MIYAKOSHI, Yoshiaki, Osaka-shi, Osaka 547-0004 (JP); MATSUOKA, Yumi, Osaka-shi, Osaka 547-0004 (JP)
(74) Representative: Isarpatent
(86) International application number: PCT/JP2025/016420
(87) International publication number: WO 2026/023191

(57) **Abstract**

A wireless communication system (1) includes a closed system (11) and a cloud system (21). The closed system (11) includes call control servers (12) that control communication between wireless stations (41, 42) each connected to a closed network (10) or the Internet network (20), closed-system gateway servers (13), and a closed-system DNS server (14) that performs name resolution. The plurality of closed-system gateway servers (13) associated with the same call control server (12) are assigned the same domain name. The closed-system DNS server (14) selects one of a plurality of closed-system devices corresponding to the same domain name in accordance with at least one of a route to the wireless station (41) and operational statuses, and transmits, to the wireless station (41), a name resolution response including an address of the selected closed-system device.

## Description

### Technical Field

The present disclosure relates to a wireless communication system and a communication method.

### Background Art

In order to enable communication devices connected to different networks, such as a local area network (LAN) and a wide area network (WAN), to communicate with each other, a gateway device is installed between the different networks. Patent Literature 1 discloses an example of a communication device that communicates with another communication device connected to a different network via a gateway device.

A voice communication system disclosed in Patent Literature 1 includes a gateway device that connects an LAN and a long term evolution (LTE), which is a communication network for mobile phones, to each other, and relays communication between a LAN communication terminal connected to the LAN and an LTE communication terminal connected to the LTE.

### Citation List

### Patent Literature

Patent Literature 1: International Publication No. WO 2017/006833

### Summary of Invention

### Technical Problem

In the voice communication system disclosed in Patent Literature 1, when a failure occurs in an LTE server, the LTE communication terminal and the LAN communication terminal cannot communicate with each other.

The present disclosure has been made in consideration of the above-described circumstances, and an objective of the present disclosure is to improve availability of a wireless communication system and a communication method that enable communication between a wireless station connected to the Internet network and a wireless station connected to a closed network.

### Solution to Problem

In order to achieve the above-described objective, a wireless communication system according to a first aspect of the present disclosure includes a closed system installed in a closed network and a cloud system installed in an Internet network, and the closed system and the cloud system are communicably connected to each other, wherein
the closed system includes
   at least one call control server to control communication between a plurality of wireless stations, each of the plurality of wireless stations being connected to the closed network or the Internet network,
   a plurality of closed-system gateway servers installed in association with the at least one call control server, the plurality of closed-system gateway servers being configured to retain association between a wireless station of the plurality of wireless stations and a call control server of the at least one call control server, when receiving a registration request or voice data from the wireless station connected to the closed network, transmit the registration request or the voice data to the call control server associated with the wireless station, and when receiving a registration response or voice data from the call control server, transmit the registration response or the voice data to the wireless station being a destination, and
   a closed-system domain name system server to, when receiving a name resolution request for a domain name of closed-system devices included in the closed system or cloud-system devices included in the cloud system from the wireless station connected to the closed network, perform name resolution for the domain name included in the name resolution request and transmit, to the wireless station, a name resolution response including an address corresponding to the domain name,
the cloud system includes
   a cloud-system gateway server to retain association between a wireless station of the plurality of wireless stations and a call control server of the at least one call control server, when receiving a registration request or voice data from the wireless station connected to the Internet network, transmit the registration request or the voice data to the call control server associated with the wireless station, and when receiving a registration response or voice data destined to the wireless station connected to the Internet network from the call control server, transmit the registration response or the voice data to the wireless station, and
   a management server to acquire operational statuses of the closed-system devices, and
when receiving the name resolution request for the closed-system devices, the closed-system domain name system server selects a closed-system device among the closed-system devices corresponding to the domain name in accordance with at least one of the operational statuses of the closed-system devices acquired by the management server or a route to the wireless station connected to the closed network, and transmits, to the wireless station, the name resolution response including an address of the selected closed-system device.

Closed-system gateway servers of the plurality of closed-system gateway servers associated with a same call control server of the at least one call control server are preferably assigned a same domain name.

A configuration is preferably provided in which,
when receiving the name resolution request for the plurality of closed-system gateway servers being the closed-system devices from the wireless station connected to the closed network, the closed-system domain name system server selects one of the closed-system gateway servers corresponding to the domain name included in the name resolution request in accordance with at least one of operational statuses of the closed-system gateway servers or the route to the wireless station, and transmits, to the wireless station, the name resolution response including an address of the selected closed-system gateway server.

The closed system preferably further includes, as the closed-system devices, a plurality of closed-system activation servers to, when accepting an activation request from the wireless station connected to the closed network, register activation information in storage devices respectively installed in the closed system and the cloud system, the activation information including unique information for uniquely identifying the wireless station.

A configuration is preferably provided in which,
when receiving the name resolution request for the plurality of closed-system activation servers being the closed-system devices from the wireless station connected to the closed network, the closed-system domain name system server selects one of closed-system activation servers of the plurality of closed-system activation servers corresponding to the domain name included in the name resolution request in accordance with at least one of operational statuses of the closed-system activation servers or the route to the wireless station, and transmits, to the wireless station, the name resolution response including an address of the selected closed-system activation server.

A configuration is preferably provided in which
the wireless communication system includes a plurality of the closed systems to be communicably connected to each other via the cloud system,
for each of the plurality of wireless stations, one of the plurality of closed systems is designated as a main closed system, and the other of the plurality of closed systems is designated as a sub-closed system,
closed-system gateway servers of the plurality of closed-system gateway servers associated with a call control server of the at least one call control server included in the main closed system and closed-system gateway servers of the plurality of closed-system gateway servers associated with a call control server of the at least one call control server included in the sub-closed system are assigned a same domain name, and
when receiving the name resolution request for the plurality of closed-system gateway servers from the wireless station connected to the closed network, the closed-system domain name system server selects one of the closed-system gateway servers assigned the domain name included in the name resolution request in accordance with at least one of an operational status of the call control server associated with the closed-system gateway servers assigned the domain name included in the name resolution request, operational statuses of the closed-system gateway servers, or the route to the wireless station.

A configuration is preferably provided in which,
when the call control server included in the main closed system is in a normal operational status, the closed-system domain name system server selects one of closed-system gateway servers of the plurality of closed-system gateway servers included in the main closed system and assigned the domain name included in the name resolution request in accordance with at least one of operational statuses of the closed-system gateway servers associated with the call control server included in the main closed system or the route to the wireless station connected to the closed network, and when the call control server included in the main closed system is in an abnormal operational status, the closed-system domain name system server selects one of closed-system gateway servers of the plurality of closed-system gateway servers included in the sub-closed system and assigned the domain name included in the name resolution request in accordance with at least one of operational statuses of the closed-system gateway servers associated with the call control server included in the sub-closed system or the route to the wireless station.

A configuration is preferably provided in which
the closed system further includes, as the closed-system devices, a plurality of closed-system activation servers to, when accepting an activation request from the wireless station connected to the closed network, register activation information in storage devices respectively installed in the closed system and the cloud system, the activation information including unique information for uniquely identifying the wireless station,
at least one of closed-system activation servers of the plurality of closed-system activation servers included in the main closed system and at least one of closed-system activation servers of the plurality of closed-system activation servers included in the sub-closed system are assigned a same domain name, and
when receiving the name resolution request for the plurality of closed-system activation servers from the wireless station connected to the closed network, the closed-system domain name system server selects one of closed-system activation servers of the plurality of closed-system activation servers assigned the domain name included in the name resolution request in accordance with at least one of operational statuses of the closed-system activation servers assigned the domain name included in the name resolution request or the route to the wireless station.

A configuration is preferably provided in which,
when at least one of the closed-system activation servers included in the main closed system is in a normal operational status, the closed-system domain name system server selects one of closed-system activation servers of the plurality of closed-system activation servers included in the main closed system and assigned the domain name included in the name resolution request in accordance with at least one of operational statuses of the closed-system activation servers included in the main closed system or the route to the wireless station connected to the closed system, and when the closed-system activation servers included in the main closed system are in an abnormal operational status, the closed-system domain name system server selects one of closed-system activation servers of the plurality of closed-system activation servers included in the sub-closed system and assigned the domain name included in the name resolution request in accordance with at least one of operational statuses of the closed-system activation servers included in the sub-closed system or the route to the wireless station.

A communication method according to a second aspect of the present disclosure is to be executed by a wireless communication system. The wireless communication system includes a closed system installed in a closed network and a cloud system installed in an Internet network. The closed system and the cloud system are communicably connected to each other. The closed system includes at least one call control server, a plurality of closed-system gateway servers, and a plurality of closed-system domain name system servers. The at least one call control server is configured to control communication between a plurality of wireless stations each connected to the closed network or the Internet network. The plurality of closed-system gateway servers is installed in association with the at least one call control server, and is configured to retain association between a wireless station of the plurality of wireless stations and a call control server of the at least one call control server. The plurality of closed-system domain name system servers is configured to perform name resolution for a domain name of closed-system devices included in the closed system or cloud-system devices included in the cloud system. The cloud system includes a cloud-system gateway server and a management server. The cloud-system gateway server is configured to retain association between a wireless station of the plurality of wireless stations and a call control server of the at least one call control server. The management server is configured to acquire operational statuses of the closed-system devices. The communication method includes:
by the plurality of closed-system gateway server,
   in response to receiving a registration request or voice data from the wireless station connected to the closed network, transmitting the registration request or the voice data to the call control server associated with the wireless station, and in response to receiving a registration response or voice data from the call control server, transmitting the registration response or the voice data to the wireless station being a destination;
by the closed-system domain name system server,
   in response to receiving a name resolution request for a domain name of the closed-system devices included in the closed system or the cloud-system devices included in the cloud system from the wireless station connected to the closed network, performing name resolution for the domain name included in the name resolution request and transmitting, to the wireless station, a name resolution response including an address corresponding to the domain name;
by the cloud-system gateway server,
   in response to receiving a registration request or voice data from the wireless station connected to the Internet network, transmitting the registration request or the voice data to the call control server associated with the wireless station, and in response to receiving a registration response or voice data destined to the wireless station connected to the Internet network from the call control server, transmitting the registration response or the voice data to the wireless station; and
by the closed-system domain name system server,
   in response to receiving the name resolution request for the closed-system devices, selecting a closed-system device among the closed-system devices corresponding to the domain name in accordance with at least one of the acquired operational statuses of the closed-system devices or a route to the wireless station connected to the closed network, and transmitting, to the wireless station, the name resolution response including an address of the selected closed-system device.

### Advantageous Effects of Invention

The closed-system domain name system server included in the wireless communication system according to the present disclosure and configured to perform name resolution selects, when receiving the name resolution request for the closed-system devices, one of the closed-system devices corresponding to the domain name in accordance with at least one of the operational statuses of the closed-system devices or the route to the wireless station connected to the closed network, and transmits, to the wireless station, the name resolution response including the address of the selected closed-system device. This enables relay of communication between the wireless stations even when a failure occurs in one of the closed-system devices, and thus improves the availability of the wireless communication system.

### Brief Description of Drawings

FIG. 1 is a block diagram illustrating a configuration of a wireless communication system according to Embodiment 1;
FIG. 2 is a block diagram illustrating a configuration of each of wireless stations in Embodiment 1;
FIG. 3 is a flowchart illustrating an example of startup processing performed by each of the wireless stations in Embodiment 1;
FIG. 4 is a sequence diagram illustrating an example of name resolution processing performed by the wireless communication system according to Embodiment 1;
FIG. 5 is a diagram illustrating an example of relationship between closed-system gateway servers and call control servers in the wireless communication system according to Embodiment 1;
FIG. 6 is a sequence diagram illustrating an example of communication establishment processing performed by the wireless communication system according to Embodiment 1;
FIG. 7 is a block diagram illustrating a configuration of a wireless communication system according to Embodiment 2;
FIG. 8 is a flowchart illustrating an example of server selection processing performed by a closed-system DNS server included in the wireless communication system according to Embodiment 2;
FIG. 9 is a block diagram illustrating a hardware configuration for implementing a closed system and a cloud system according to the embodiments; and
FIG. 10 is a block diagram illustrating a modified example of the hardware configuration for implementing the closed system and the cloud system according to the embodiments.

### Description of Embodiments

A wireless communication system and a communication method according to embodiments of the present disclosure are described below in detail with reference to the drawings. Components identical or corresponding to each other are provided with the same reference sign in the drawings.

### Embodiment 1

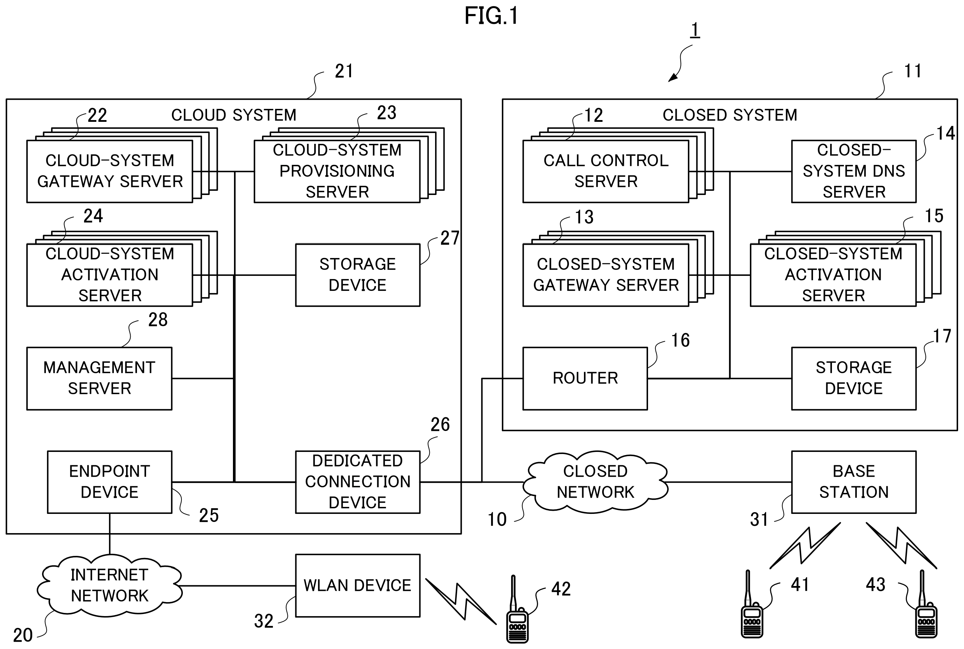

A wireless communication system 1 illustrated in FIG. 1 relays communication between wireless stations 41, 42, and 43 each connected to a closed network 10 or the Internet network 20. In Embodiment 1, the wireless stations 41, 42, and 43 are internet protocol (IP) transceivers that perform voice communication. The wireless stations 41, 42, and 43 have the same configuration and functions. In the example in FIG. 1, the wireless stations 41 and 43 are connected to the closed network 10 via a base station 31, and the wireless station 42 is connected to the Internet network 20 via a wireless local area network (WLAN) device 32. The WLAN device 32 is, for example, an access point device.

The wireless communication system 1 includes a closed system 11 installed in the closed network 10, and a cloud system 21 installed in the Internet network 20. The closed system 11 includes a plurality of call control servers 12, a plurality of closed-system gateway servers 13, a closed-system domain name system (DNS) server 14, a plurality of closed-system activation servers 15, a router 16, and a storage device 17. The cloud system 21 includes a plurality of cloud-system gateway servers 22, a plurality of cloud-system provisioning servers 23, a plurality of cloud-system activation servers 24, an endpoint device 25, a dedicated connection device 26, a storage device 27, and a management server 28.

The closed system 11 and the cloud system 21 are connected to each other via a dedicated line. The dedicated connection device 26 connects, via the dedicated line, each of cloud-system devices included in the cloud system 21 to closed-system devices included in the closed system 11 and the closed network 10. The closed-system devices are the above-described components of the closed system 11, more specifically, the call control servers 12, the closed-system gateway servers 13, the closed-system DNS server 14, the closed-system activation servers 15, the router 16, and the storage device 17. The cloud-system devices are the components of the cloud system 21, more specifically, the cloud-system gateway servers 22, the cloud-system provisioning servers 23, the cloud-system activation servers 24, the endpoint device 25, the storage device 27, and the management server 28. The devices include not only physically existing devices but also virtual devices.

The closed system 11 includes any number of two or more call control servers 12. Each of the call control servers 12 controls communication among the wireless stations 41, 42, and 43, more specifically, performs call control such as transmission and reception of voice signals.

The closed system 11 includes any number of two or more closed-system gateway servers 13 installed in association with the call control servers 12. Each of the closed-system gateway servers 13 retains association between the wireless stations 41 and 43 and the call control server 12. As an example, each of the closed-system gateway servers 13 retains a table in which unique information for uniquely identifying each of the wireless stations 41 and 43 is associated with an address of the call control server 12. The unique information for uniquely identifying each of the wireless stations 41 and 43 is, for example, an international mobile equipment identifier (IMEI), an integrated circuit card identifier (ICCID) that is an identification number of a subscriber identity module (SIM) card inserted to each of the wireless stations 41 and 43, or the like.

When receiving a registration request or voice data via the router 16 from the wireless station 41 connected to the closed network 10, the closed-system gateway server 13 transmits the received registration request or voice data to the call control server 12 associated with the wireless station 41. When receiving a registration response or voice data from the call control server 12, the closed-system gateway server 13 transmits the received registration response or voice data via the router 16 to the wireless station 41 that is a destination.

The closed-system DNS server 14 performs name resolution for the closed-system devices included in the closed system 11 and the cloud-system devices included in the cloud system 21. The closed-system devices for which the name resolution is to be performed by the closed-system DNS server 14 are, for example, the closed-system gateway servers 13 and the closed-system activation servers 15. The cloud-system devices for which the name resolution is to be performed by the closed-system DNS server 14 are, for example, the cloud-system activation servers 24.

Specifically, when receiving, from the wireless station 41 connected to the closed network 10, a name resolution request for a domain name of the closed-system devices included in the closed system 11 or the cloud-system devices included in the cloud system 21, the closed-system DNS server 14 performs name resolution for the domain name included in the name resolution request, and transmits, to the wireless station 41, a name resolution response including an address corresponding to the domain name.

The closed system 11 includes any number of two or more closed-system activation servers 15. When accepting an activation request from the wireless station 41 or 43 connected to the closed network 10, each of the closed-system activation servers 15 registers activation information including the unique information of the wireless station 41 or 43 in the storage devices 17 and 27 installed in the closed system 11 and the cloud system 21, respectively.

The storage device 17 is a database (DB) server storing the activation information, such as a NoSQL server.

The router 16 transfers data received from the cloud system 21 or the closed network 10 to the closed-system devices included in the closed system 11 in accordance with the destination of the data.

The dedicated connection device 26 includes, for example, a virtual interface connected to the closed system 11 and the closed network 10 via dedicated lines. The dedicated connection device 26 transmits data received from the closed system 11 having the above-described configuration or the closed network 10 to the cloud-system device included in the cloud system 21, more specifically, a server in the cloud system 21, that is, one of the cloud-system gateway servers 22, the cloud-system provisioning servers 23, the cloud-system activation servers 24, and the management server 28, in accordance with the type of the data. The dedicated connection device 26 also transfers, to the closed system 11 or the closed network 10, data received from the cloud-system device, more specifically, each server in the cloud system 21.

As an example, when receiving a provisioning request from the wireless station 41 via the base station 31 and the closed network 10, the dedicated connection device 26 transfers the provisioning request to the cloud-system provisioning server 23 via a non-illustrated load balancing device. Specifically, the load balancing device transfers the provisioning request to one of the plurality of cloud-system provisioning servers 23 in accordance with at least one of a route to the wireless station 41 and operational statuses of the respective cloud-system provisioning servers 23. As an example, the load balancing device selects, using a round-robin method, one of the plurality of cloud-system provisioning servers 23, and transfers the provisioning request to the selected cloud-system provisioning server 23.

When receiving a provisioning response from the cloud-system provisioning server 23 via the load balancing device, the dedicated connection device 26 transmits the provisioning response to the wireless station 41 via the closed network 10.

As another example, when receiving an operation notification transmitted from the closed-system device included in the closed system 11, more specifically, one of the call control servers 12, the closed-system gateway servers 13, and the closed-system activation servers 15, the dedicated connection device 26 transfers the operation notification to the management server 28.

The endpoint device 25 is an interface that connects the cloud system 21 and the Internet network 20 to each other. The endpoint device 25 transmits data received from the Internet network 20 to the cloud-system device included in the cloud system 21, more specifically, each server in the cloud system 21 in accordance with the type of the data. Specifically, the endpoint device 25 transfers the data received from the Internet network 20 to one of the cloud-system gateway servers 22, the cloud-system provisioning servers 23, the cloud-system activation servers 24, and the management server 28. The endpoint device 25 also transfers data received from the cloud-system device, more specifically, each server in the cloud system 21 to the wireless station 42 via the Internet network 20.

As an example, when receiving a provisioning request from the wireless station 42 via the WLAN device 32 and the Internet network 20, the endpoint device 25 transfers the provisioning request to the cloud-system provisioning server 23 via a non-illustrated load balancing device. Specifically, the load balancing device transfers the provisioning request to one of the plurality of cloud-system provisioning servers 23 in accordance with at least one of a route to the wireless station 42 and the operational status of the respective cloud-system provisioning servers 23. As an example, the load balancing device selects, using the round-robin method, one of the plurality of cloud-system provisioning servers 23, and transfers the provisioning request to the selected cloud-system provisioning server 23.

When receiving a provisioning response from the cloud-system provisioning server 23 via the load balancing device, the endpoint device 25 transmits the provisioning response to the wireless station 42 via the Internet network 20.

Each of the cloud-system gateway servers 22 retains association between the wireless station 42 and the call control server 12. As an example, each of the cloud-system gateway servers 22 retains a table in which unique information of the wireless station 42 is associated with an address of the call control server 12. The unique information for uniquely identifying the wireless station 42 is, for example, an IMEl, an ICCID that is an identification number of a SIM card inserted to the wireless station 42, or the like.

When receiving a registration request or voice data from the wireless station 42 connected to the Internet network 20, the cloud-system gateway server 22 transmits the received registration request or voice data to the call control server 12 associated with the wireless station 42. When receiving a registration response or voice data from the call control server 12, the cloud-system gateway server 22 transmits the received registration response or voice data to the wireless station 42 that is a destination.

When receiving a provisioning request from the wireless station 41, 42, or 43, the cloud-system provisioning server 23 transmits a provisioning response including a domain name of the corresponding gateway servers to the wireless station 41, 42, or 43.

When receiving, from the wireless station 42 connected to the Internet network 20, an authentication request including the unique information of the wireless station 42 and generation information of an encryption key, the cloud-system activation server 24 causes the activation information including the unique information and the generation information to be stored in a storage device installed in at least one of the closed system 11 and the cloud system 21, for example, the storage devices 17 and 27 installed in the closed system 11 and the cloud system 21, respectively.

The storage device 27 is a DB server storing the activation information and operational statuses of the closed-system devices and the cloud-system devices, such as a NoSQL server.

The management server 28 acquires information of each of the closed-system devices. The management server 28 preferably further acquires information of each of the cloud-system devices. Specifically, the management server 28 receives operation notifications periodically transmitted from each of the call control servers 12, the closed-system gateway servers 13, the closed-system activation servers 15, the cloud-system gateway servers 22, the cloud-system provisioning servers 23, and the cloud-system activation servers 24. The management server 28 causes the operation notifications of the closed-system devices and the cloud-system devices acquired as described above to be stored in the storage device 27. When the operation notifications are periodically received, the closed-system device or the cloud-system device being a transmission source of the operation notifications can be considered to be in a normal operational status. When a state in which the operation notifications cannot be received from the closed-system device or the cloud-system device continues for a predetermined period, the closed-system device or the cloud-system device that has not transmitted the operation notifications can be considered to be in an abnormal operational status. In other words, the storage device 27 stores information indicating whether each of the closed-system devices and the cloud-system devices is in a normal operational status or an abnormal operational status.

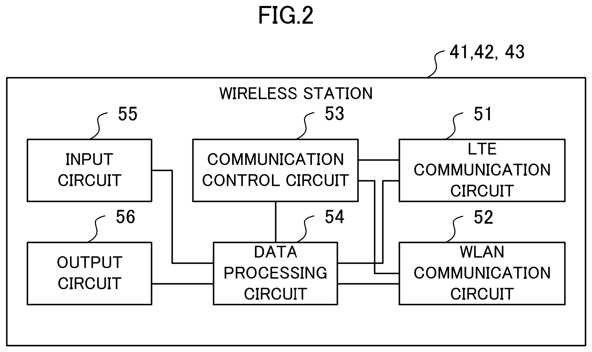

FIG. 2 illustrates a configuration of each of the wireless stations 41, 42, and 43 that communicate with one another via the wireless communication system 1 having the above-described configuration. Each of the wireless stations 41, 42, and 43 includes an LTE communication circuit 51, a WLAN communication circuit 52, a communication control circuit 53, a data processing circuit 54, an input circuit 55, and an output circuit 56. The LTE communication circuit 51 is connected to the closed network 10, and performs transmission and reception of closed network data conforming to a communication standard of the closed network 10. The WLAN communication circuit 52 is connected to the Internet network 20 via the WLAN device 32, and performs transmission and reception of communication data conforming to a communication standard of the Internet network 20. The communication control circuit 53 controls the LTE communication circuit 51 and the WLAN communication circuit 52 to establish voice communication.

The data processing circuit 54 generates, from transmission data generated by the input circuit 55, the closed network data to be transmitted from the LTE communication circuit 51 or the communication data to be transmitted from the WLAN communication circuit 52. The data processing circuit 54 generates reception data from the closed network data received by the LTE communication circuit 51 or the communication data received by the WLAN communication circuit 52, and outputs the reception data to the output circuit 56.

The input circuit 55 acquires voice signals from a non-illustrated microphone, performs signal processing, such as analog-to-digital (A-D) conversion, noise filtering, and amplification, to generate the transmission data, and transmits the generated transmission data to the data processing circuit 54.

The output circuit 56 performs signal processing, such as noise filtering, amplification, and digital-to-analog (D-A) conversion, on the reception data acquired from the data processing circuit 54 to generate voice data, and outputs the generated voice data from a non-illustrated speaker. The output circuit 56 may acquire a result of processing, such as activation, provisioning, or registration, from the data processing circuit 54, and display the result on a non-illustrated screen.

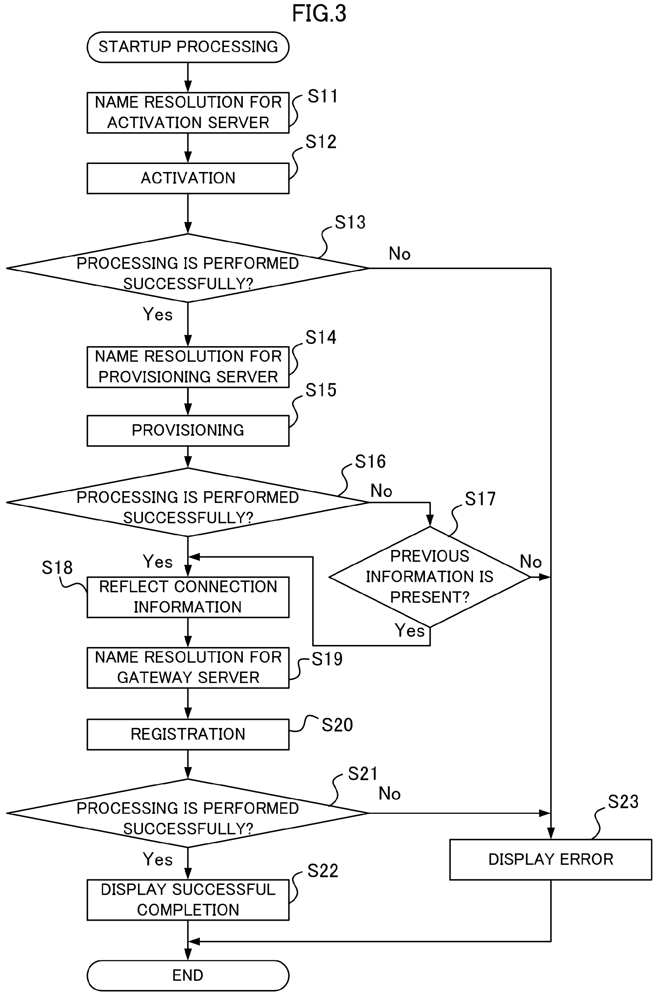

Each of the wireless stations 41, 42, and 43 having the above-described configuration starts startup processing illustrated in FIG. 3 at startup such as power-on. The startup processing enables the wireless stations 41, 42, and 43 to start voice communication.

The wireless stations 41 and 43 connected to the closed network 10 perform the same startup processing. The startup processing performed by the wireless station 41 is thus described below. The wireless station 41 performs name resolution for the closed-system activation server 15 to configure setting for starting operation of the wireless station 41 (step S11).

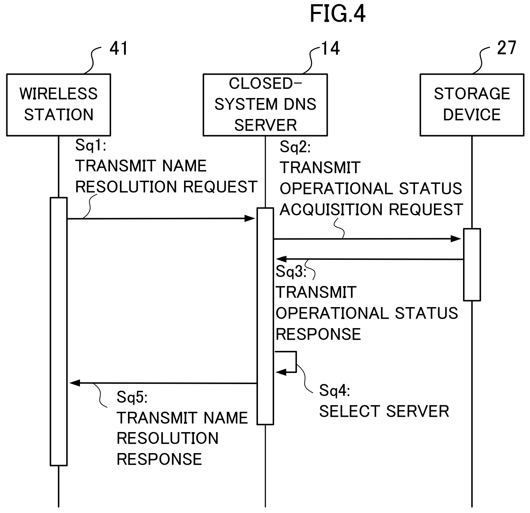

FIG. 4 illustrates details of name resolution processing performed by the wireless station 41. The wireless station 41 transmits, to the closed-system DNS server 14, a name resolution request including a domain name of the closed-system activation server 15 to be a destination of an activation request (sequence Sq1). Specifically, the wireless station 41 sets a transmission source IP address to an IP address of the wireless station 41, sets a destination IP address to an IP address of the closed-system DNS server 14, and generates and transmits the name resolution request including the domain name of the closed-system activation server 15. The wireless station 41 preliminarily retains the IP address of the closed-system DNS server 14. The name resolution request transmitted from the wireless station 41 reaches the closed-system DNS server 14 via the base station 31, the closed network 10, and the router 16.

When receiving the name resolution request including the domain name of the closed-system activation server 15, the closed-system DNS server 14 transmits, to the storage device 27, an operational status acquisition request for each of the closed-system activation servers 15 (sequence Sq2). The operational status acquisition request reaches the storage device 27 via the router 16 and the dedicated connection device 26.

When receiving the operational status acquisition request for each of the closed-system activation servers 15, the storage device 27 reads operational statuses of the respective closed-system activation servers 15, and transmits, to the closed-system DNS server 14, an operational status response that includes information indicating the operational statuses (sequence Sq3). The operational status response transmitted from the storage device 27 reaches the closed-system DNS server 14 via the dedicated connection device 26 and the router 16.

The closed-system DNS server 14 selects the closed-system activation server 15 to be the destination of the activation request in accordance with at least one of the operational statuses of the respective closed-system activation servers 15 acquired from the storage device 27 and the route to the wireless station 41 (sequence Sq4). As an example, the closed-system DNS server 14 selects, based on the round-robin method, one closed-system activation server 15 from the plurality of closed-system activation servers 15 in a normal operational status.

The closed-system DNS server 14 transmits, to the wireless station 41, a name resolution response including an address of the selected closed-system activation server 15 (sequence Sq5). Specifically, the closed-system DNS server 14 sets a transmission source IP address to the IP address of the closed-system DNS server 14, sets a destination IP address to the transmission source IP address of the name resolution request, and generates and transmits the name resolution response including the address of the selected closed-system activation server 15. The name resolution response transmitted from the closed-system activation server 15 reaches the wireless station 41 via the router 16, the closed network 10, and the base station 31.

As illustrated in FIG. 3, after completion of the name resolution processing in step S11, the wireless station 41 performs activation processing on the closed-system activation server 15 (step S12). In step S12, the wireless station 41 transmits an activation request to the closed-system activation server 15. In response to the activation request from the wireless station 41, the closed-system activation server 15 registers the activation information including the unique information of the wireless station 41 in the storage devices 17 and 27. When the activation information has been registered, the closed-system activation server 15 transmits, to the wireless station 41, a notification that activation has been completed successfully.

For example, when the closed-system activation server 15 cannot access either the storage device 17 or 27 and the activation information has not been registered successfully, the closed-system activation server 15 transmits an error notification, such as a notification that activation has been canceled, to the wireless station 41.

When the activation processing has not been completed successfully (No in step S13), for example, when receiving the error notification from the closed-system activation server 15, the wireless station 41 displays, on the screen, a notification that an error occurs (step S23).

When the activation processing has been completed successfully (Yes in step S13), the wireless station 41 performs name resolution for the cloud-system provisioning server 23 to perform provisioning processing to acquire connection information (step S14). In the name resolution processing in step S14, only sequences Sq1 and Sq5 in FIG. 4 are executed. In sequence Sq1, the wireless station 41 transmits, to the closed-system DNS server 14, a name resolution request including a domain name of the load balancing device that is to be a destination of a provisioning request and is connected to the plurality of cloud-system provisioning servers 23.

In sequence Sq5, the closed-system DNS server 14 transmits, to the wireless station 41, a name resolution response including an address of the load balancing device.

As illustrated in FIG. 3, after completion of the name resolution processing in step S14, the wireless station 41 performs the provisioning processing on the cloud-system provisioning server 23 (step S15). In step S15, the wireless station 41 generates a provisioning request of which a destination IP address is set to the address of the load balancing device. The provisioning request transmitted from the wireless station 41 reaches the cloud-system provisioning server 23 via the base station 31, the closed network 10, the dedicated connection device 26, and the load balancing device.

When receiving the provisioning request, the cloud-system provisioning server 23 extracts the unique information of the wireless station 41 included in the provisioning request, and acquires the activation information of the wireless station 41 from the storage device 27. The cloud-system provisioning server 23 performs an inspection to determine, based on the acquired activation information, whether activation of the wireless station 41 is performed successfully.

When the activation is performed successfully, the cloud-system provisioning server 23 transmits, to the dedicated connection device 26 via the load balancing device, the provisioning response destined to the wireless station 41 and including the connection information for connection to the call control servers 12 associated with the wireless station 41.

When receiving the provisioning response, the load balancing device transfers the provisioning response to the wireless station 41 being the destination via the dedicated connection device 26. The provisioning response transmitted from the cloud-system provisioning server 23 reaches the wireless station 41 via the load balancing device, the dedicated connection device 26, the closed network 10, and the base station 31.

For example, when the cloud-system provisioning server 23 cannot access the storage device 27 and cannot acquire the activation information, the cloud-system provisioning server 23 transmits, to the load balancing device, an error notification destined to the wireless station 41. When receiving the error notification, the load balancing device transfers the error notification to the wireless station 41 via the dedicated connection device 26.

When the provisioning processing has not been completed successfully (No in step S16), for example, when the wireless station 41 receives the error notification from the cloud-system provisioning server 23 or cannot be connected to the cloud-system provisioning server 23, the wireless station 41 determines whether previous information that is the connection information acquired in the previous startup processing is present (step S17). When no previous information is present (No in step S17), the wireless station 41 displays, on the screen, a notification that an error occurs (step S23).

When the provisioning processing has not been completed successfully but the previous information is present (No in step S16 and Yes in step S17), or when the provisioning processing has been completed successfully (Yes in step S16), the wireless station 41 reflects the connection information acquired in step S15 or the previous information as the connection information in the wireless station 41 (step S18).

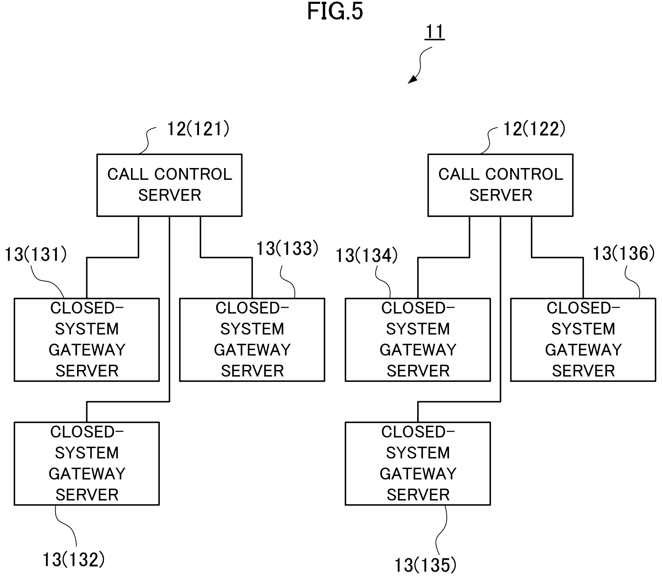

Next, in order to perform registration to register information of the wireless station 41 in the call control server 12, the wireless station 41 performs name resolution for the closed-system gateway server 13. FIG. 5 illustrates an example of relationship between the call control servers 12 and the closed-system gateway servers 13. Among the components of the closed system 11, FIG. 5 illustrates the call control servers 12 and the closed-system gateway servers 13. The call control servers 12 illustrated in FIG. 5 are distinguished by referring to the call control servers 12 as call control servers 121 and 122. The closed-system gateway servers 13 are distinguished by referring to the closed-system gateway servers 13 as closed-system gateway servers 131, 132, 133, 134, 135, and 136. The call control server 121 is associated with the closed-system gateway servers 131, 132, and 133. The call control server 122 is associated with the closed-system gateway servers 134, 135, and 136.

The closed-system gateway servers 13 associated with the same call control server 12 are assigned the same domain name. In other words, the closed-system gateway servers 131, 132, and 133 associated with the call control server 121 are assigned the same domain name, such as gw1. The closed-system gateway servers 131, 132, and 133 are assigned mutually different addresses. Similarly, the closed-system gateway servers 134, 135, and 136 associated with the call control server 122 are assigned the same domain name, such as gw2. The closed-system gateway servers 134, 135, and 136 are assigned mutually different addresses.

Each of the wireless stations 41, 42, and 43 is associated with one of the call control servers 12, and performs registration to the associated call control server. As an example, the wireless stations 41 and 42 are associated with the call control server 121, and the wireless station 43 is associated with the call control server 122. In other words, when accepting registration of the wireless station 41 or 42, the call control server 121 performs call control for the wireless station 41 or 42, such as transmission and reception of a call or response to a call. Similarly, when accepting registration of the wireless station 43, the call control server 122 performs call control for the wireless station 43, such as transmission and reception of a call or response to a call.

The wireless station 41 performs registration to the call control server 121 via one of the closed-system gateway servers 131 to 133. Specifically, as illustrated in FIG. 3, the wireless station 41 requests the closed-system DNS server 14 to perform name resolution for one of the closed-system gateway servers 131 to 133 (step S19). Operations of the name resolution processing performed by the wireless station 41 in step S19 are the same as those in FIG. 4. In sequence Sq1, the wireless station 41 transmits, to the closed-system DNS server 14, a name resolution request including the domain name, such as gw1, of the closed-system gateway servers 131 to 133 to be a destination of a registration request.

In sequence Sq2, the closed-system DNS server 14 transmits, to the storage device 27, an operational status acquisition request for the closed-system gateway servers 131 to 133. In sequence Sq3, the storage device 27 transmits, to the closed-system DNS server 14, an operational status response including information about operational statuses of the closed-system gateway servers 131 to 133.

In sequence Sq4, the closed-system DNS server 14 selects the closed-system gateway server 13 to be the destination of the registration request in accordance with at least one of the operational statuses of the closed-system gateway servers 131 to 133 acquired from the storage device 27 and the route to the wireless station 41. As an example, the closed-system DNS server 14 selects, using the round-robin method, one of the closed-system gateway servers 131 to 133 in a normal operational state from the closed-system gateway servers 131 to 133. For example, the closed-system DNS server 14 selects the closed-system gateway server 131.

In sequence Sq5, the closed-system DNS server 14 transmits, to the wireless station 41, a name resolution response including an address of the selected closed-system gateway server 131.

As illustrated in FIG. 3, after completion of the name resolution processing in step S19, the wireless station 41 performs registration processing on the closed-system gateway server 131 (step S20). In step S20, the wireless station 41 transmits the registration request to the closed-system gateway server 131. Specifically, the wireless station 41 sets a transmission source IP address to the IP address of the wireless station 41, sets a destination IP address to the address of the closed-system gateway server 131 included in the name resolution response, and generates and transmits the registration request including the unique information of the wireless station 41. The registration request transmitted from the wireless station 41 reaches the closed-system gateway server 131 via the base station 31, the closed network 10, and the router 16.

When receiving the registration request, the closed-system gateway server 131 transmits the registration request including the unique information of the wireless station 41 to the call control server 121 associated with the wireless station 41. The closed-system gateway server 131 retains the transmission source address of the registration request and the unique information of the wireless station 41 included in the registration request in association with each other.

When receiving the registration request, the call control server 121 transmits the registration response including the unique information of the wireless station 41 to the closed-system gateway server 131 that is the transmission source of the registration request.

When receiving the registration response, the closed-system gateway server 131 transmits the registration response to the wireless station 41. Specifically, the closed-system gateway server 131 sets a transmission source IP address to an IP address of the closed-system gateway server 131, sets a destination IP address to an IP address corresponding to the unique information of the wireless station 41 included in the registration response received from the call control server 121, and generates and transmits the registration response. The registration response transmitted from the closed-system gateway server 131 reaches the wireless station 41 via the router 16, the closed network 10, and the base station 31.

As illustrated in FIG. 3, when the registration processing has not been completed successfully (No in step S21), for example, when the wireless station 41 cannot receive the registration response from the closed-system gateway server 131 within a predetermined period, the wireless station 41 displays, on the screen, a notification that an error occurs (step S23). The predetermined period may be determined in accordance with a time needed to transmit a registration request and receive the registration response under normal conditions, an acceptable length of downtime, or the like.

When the registration processing has been completed successfully (Yes in step S21), more specifically, when the wireless station 41 receives the registration response from the closed-system gateway server 131, the wireless station 41 displays, on the screen, a notification that the startup processing has been completed successfully (step S22). After the notification that the startup processing has been completed successfully has been displayed on the screen in step S22, the wireless station 41 can start voice communication. After completion of step S22 or S23, the wireless station 41 ends the startup processing.

The wireless station 43 performs the startup processing in the same manner as the wireless station 41. The wireless station 43 performs registration to the call control server 122 via one of the closed-system gateway servers 134 to 136. Specifically, in step S19, the wireless station 43 requests the closed-system DNS server 14 to perform name resolution for one of the closed-system gateway servers 134 to 136. Operations of the name resolution processing performed by the wireless station 43 in step S19 are the same as those in FIG. 4. In sequence Sq1, the wireless station 43 transmits, to the closed-system DNS server 14, a name resolution request including the domain name, such as gw2, of the closed-system gateway servers 134 to 136 to be a destination of a registration request.

The startup processing of the wireless station 42 is the same as that illustrated in FIG. 3. In name resolution in steps S11, S14, and S19, the wireless station 42 transmits, to the Internet DNS server on the Internet network 20 not illustrated in FIG. 1, a name resolution request including a domain name of the endpoint device 25. When receiving the name resolution request including the domain name of the endpoint device 25, the Internet DNS server transmits, to the wireless station 42, a name resolution response including an address of the endpoint device 25. The wireless station 42 may transmit an activation request, a provisioning request, or a registration request to the endpoint device 25.

When receiving the activation request, the provisioning request, or the registration request, the endpoint device 25 transfers the received request in accordance with the type of the request. Specifically, the endpoint device 25 transfers the activation request to the cloud-system activation server 24, transfers the provisioning request to the cloud-system provisioning server 23 via the load balancing device, and transfers the registration request to the cloud-system gateway server 22.

When transferring the activation request or the registration request, the endpoint device 25 acquires operational statuses of respective servers to be a transfer destination from the storage device 27, and selects the transfer destination in accordance with the operational statuses. Specifically, the endpoint device 25 selects one of the plurality of cloud-system activation servers 24 in accordance with operational statuses of the respective cloud-system activation servers 24. As an example, the endpoint device 25 selects, using the round-robin method, the cloud-system activation server 24 to be a transfer destination of the activation request from the cloud-system activation servers 24 in a normal operational status. The endpoint device 25 transfers the activation request to the selected cloud-system activation server 24.

The endpoint device 25 acquires, from the storage device 27, operational statuses of the respective cloud-system gateway servers 22 to be a transfer destination, and selects one of the plurality of cloud-system gateway servers 22 in accordance with the operational statuses. As an example, the endpoint device 25 selects, using the round-robin method, the cloud-system gateway server 22 to be the transfer destination of the registration request from the cloud-system gateway servers 22 in a normal operational status. The endpoint device 25 transfers the registration request to the selected cloud-system gateway server 22.

The endpoint device 25 transfers the provisioning request to the load balancing device. The load balancing device selects one of the plurality of cloud-system provisioning servers 23 in accordance with the operational statuses of the respective cloud-system provisioning servers 23. As an example, the load balancing device selects, using the round-robin method, the cloud-system provisioning server 23 to be a transfer destination of the provisioning request from the cloud-system provisioning servers 23 in a normal operational status. The load balancing device transfers the provisioning request to the selected cloud-system provisioning server 23.

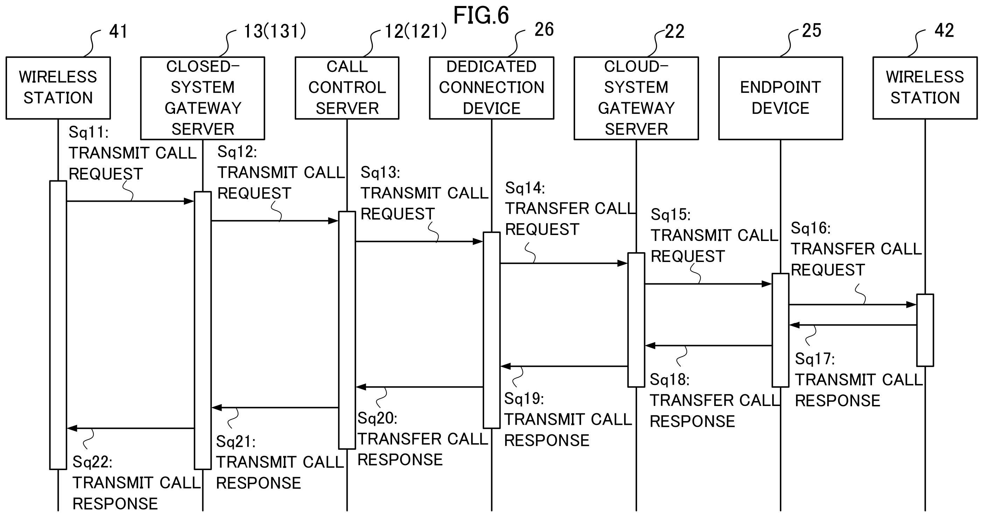

Completion of the startup processing of each of the wireless stations 41 to 43 as described above enables voice communication among the wireless stations 41 to 43. FIG. 6 illustrates an example in which the wireless station 41 requests a call with the wireless station 42. The wireless station 41 transmits, to the closed-system gateway server 131, a call request designating the wireless station 42 as a call destination, more specifically, a call request including an ID of the wireless station 42 as a destination ID (sequence Sq11). When receiving the call request, the closed-system gateway server 131 transmits the call request to the call control server 121 (sequence Sq12).

The call control server 121 retains association between the destination ID and the closed-system gateway server 131 or the cloud-system gateway server 22. The wireless station 42 being the call destination is connected to the Internet network 20, and is thus associated with the cloud-system gateway server 22. Thus, when receiving the above-described call request, the call control server 121 transmits, to the dedicated connection device 26, a call request destined to the cloud-system gateway server 22 associated with the wireless station 42 that is the call destination (sequence Sq13). The call request reaches the dedicated connection device 26 from the call control server 121 via the router 16. When receiving the call request, the dedicated connection device 26 transfers the call request to the cloud-system gateway server 22 that is the destination (sequence Sq14).

When receiving the call request, the cloud-system gateway server 22 transmits, to the endpoint device 25, the call request destined to the wireless station 42 that is the call destination (sequence Sq15). When receiving the call request, the endpoint device 25 transfers the call request via the Internet network 20 and the WLAN device 32 to the wireless station 42 that is the destination (sequence Sq16).

When receiving the call request, the wireless station 42 generates a call response destined to the wireless station 41 that is the transmission source of the call request, and transmits the call response to the endpoint device 25 (sequence Sq17). When receiving the call response, the endpoint device 25 transfers the call response to the cloud-system gateway server 22 (sequence Sq18). When receiving the call response destined to the wireless station 41, the cloud-system gateway server 22 transmits, to the dedicated connection device 26, a call response destined to the call control server 121 associated with the wireless station 41 (sequence Sq19). When receiving the call response, the dedicated connection device 26 transfers the call response to the call control server 121 that is the destination (sequence Sq20).

When receiving the call response, the call control server 121 transmits the call response to the closed-system gateway server 131 associated with the wireless station 41 that is the destination (sequence Sq21). When receiving the call response, the closed-system gateway server 131 transmits the call response to the wireless station 41 that is the destination (sequence Sq22). Establishment of a call session as described above enables voice communication between the wireless stations 41 and 42. Transfer of voice data is performed in the same manner as illustrated in FIG. 6.

As described above, in the wireless communication system 1 according to Embodiment 1, the closed-system DNS server 14 selects one of the plurality of closed-system devices corresponding to the domain name included in the name resolution request in accordance with the operational statuses of the closed-system devices. This distributes the load of the closed-system devices, and thus improves the availability of the wireless communication system 1.

The wireless stations 41 and 43 when being connected to the Internet network 20 perform the same operations as the above-described wireless station 42. The wireless station 42 when being connected to the closed network 10 performs the same operations as the above-described wireless station 41. This enables the wireless stations 41 to 43 to be connected to the call control servers 12 and perform communication with other wireless stations regardless of whether each of the wireless stations 41 to 43 is connected to the closed network 10 or the Internet network 20. In other words, each of the call control servers 12 controls voice communication among the wireless stations 41 to 43 regardless of whether one of the wireless stations 41 to 43 associated with the call control server 12 is connected to the closed network 10 or the Internet network 20.

In addition to the above-described embodiment, various modifications may be made to the wireless communication system 1 according to Embodiment 1.

First, the method for selecting, by the closed-system DNS server 14, one of the plurality of closed-system devices corresponding to the domain name included in the name resolution request is not limited to the round-robin method, and may be any method capable of distributing the load based on the operational statuses of the closed-system devices. The same applies to the load balancing device included in the cloud system 21.

Second, the management server 28 may issue a query at regular intervals to each of the closed-system devices and the cloud-system devices to acquire the operational statuses of the closed-system devices and the cloud-system devices. The management server 28 causes the acquired operational statuses of the closed-system devices and the cloud-system devices to be stored in the storage device 27.

### Embodiment 2

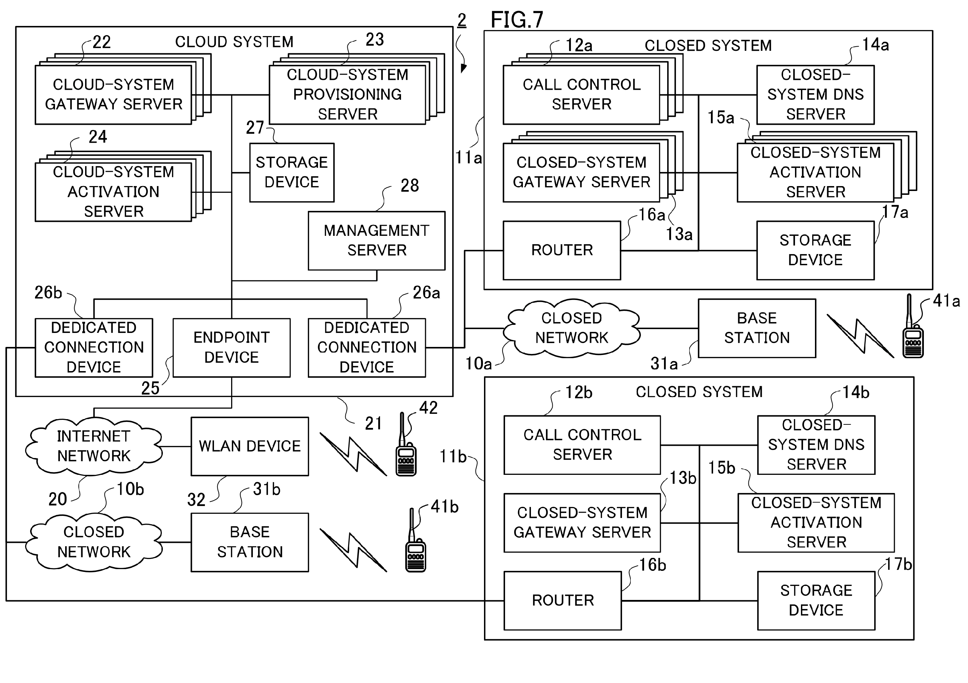

The wireless communication system may include a plurality of closed systems. As illustrated in FIG. 7, a wireless communication system 2 according to Embodiment 2 includes a closed system 11a installed in a closed network 10a, a closed system 11b installed in a closed network 10b, and the cloud system 21.

The closed systems 11a and 11b have the same configuration as the closed system 11 included in the wireless communication system 1 according to Embodiment 1. Specifically, the closed system 11a includes call control servers 12a, closed-system gateway servers 13a, a closed-system DNS server 14a, closed-system activation servers 15a, a router 16a, and a storage device 17a. The closed system 11b includes call control servers 12b, closed-system gateway servers 13b, a closed-system DNS server 14b, closed-system activation servers 15b, a router 16b, and a storage device 17b.

The cloud system 21 has a configuration different from that of the cloud system 21 included in the wireless communication system 1 according to Embodiment 1. The cloud system 21 includes dedicated connection devices 26a and 26b corresponding to the closed systems 11a and 11b, respectively. Specifically, the dedicated connection device 26a connects, via a dedicated line, each of the cloud-system devices included in the cloud system 21 to closed-system devices included in the closed system 11a and the closed network 10a. The dedicated connection device 26b connects, via a dedicated line, each of the cloud-system devices included in the cloud system 21 to closed-system devices included in the closed system 11b and the closed network 10b.

Wireless stations 41a, 41b, and 42 can perform voice communication with one another via the wireless communication system 2. Startup processing performed by the wireless stations 41a, 41b, and 42 is the same as that in Embodiment 1. The wireless stations 41a and 41b are associated with the closed systems 11a and 11b, respectively.

For each of the wireless stations 41a, 41b, and 42, one of the closed systems 11a and 11b is designated as a main closed system, and the other of the closed systems 11a and 11b is designated as a sub-closed system. In Embodiment 2, for the wireless stations 41a and 42, the closed system 11a is designated as the main closed system, and the closed system 11b is designated as the sub-closed system. For the wireless station 41b, the closed system 11b is designated as the main closed system, and the closed system 11a is designated as the sub-closed system.

The plurality of closed-system gateway servers 13a each associated with one of the call control servers 12a included in the closed system 11a and the plurality of closed-system gateway servers 13b each associated with one of the call control servers 12b included in the closed system 11b are assigned the same domain name. Similarly, at least one of the closed-system activation servers 15a included in the closed system 11a and at least one of the closed-system activation servers 15b included in the closed system 11 are assigned the same domain name.

When the wireless station 41a performing the startup processing cannot be connected to the closed-system gateway servers 13a or the closed-system activation servers 15a included in the main closed system, the closed-system DNS server 14a performs name resolution so as to connect the wireless station 41a to the closed-system gateway servers 13b or the closed-system activation servers 15b included in the sub-closed system.

When the wireless station 41b performing the startup processing cannot be connected to the closed-system gateway servers 13b or the closed-system activation servers 15b, the closed-system DNS server 14b performs name resolution so as to connect the wireless station 41b to the closed-system gateway servers 13a or the closed-system activation servers 15a.

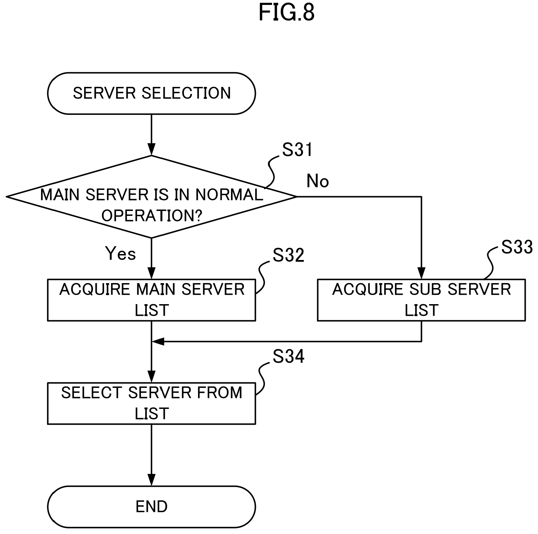

The closed-system DNS servers 14a and 14b perform the same operations. The operations of the closed-system DNS server 14a are described. FIG. 8 illustrates details of server selection processing performed by the closed-system DNS server 14a in sequence Sq4 in FIG. 4.

When performing name resolution for the activation servers, the closed-system DNS server 14a acquires, from the storage device 27, operational statuses of the respective closed-system activation servers 15a and 15b assigned the same domain name, and determines, based on the acquired operational statuses, whether the closed-system activation servers 15a being main servers are in a normal operational status (step S31). When each of the closed-system activation servers 15a is in a normal operational status (Yes in step S31), the closed-system DNS server 14a acquires a list of the main servers by reading addresses of the respective closed-system activation servers 15a from a non-illustrated memory (step S32).

When an abnormality occurs in each of the closed-system activation servers 15a (No in step S31), the closed-system DNS server 14a acquires a list of sub servers by reading addresses of the respective closed-system activation servers 15b from a non-illustrated memory (step S33).

The closed-system DNS server 14a selects a server from the list of the main servers acquired in step S32 or the list of the sub servers acquired in step S33 (step S34). As an example, the closed-system DNS server 14a uses the round-robin method to select a server from the list of the main servers or the list of the sub servers. Specifically, the closed-system DNS server 14a selects a server from the list of the main servers or the list of the sub servers based on a route to the wireless station 41a, more specifically, such that the route to the wireless station 41a is shortest. After completion of the processing in step S34, the closed-system DNS server 14a ends the server selection processing, and transmits, to the wireless station 41a, a name resolution response including an address of the server selected in step S34.

The closed-system DNS server 14a also performs the same operations when performing name resolution in activation. Specifically, when performing name resolution for the gateway servers, the closed-system DNS server 14a acquires operational statuses of the respective closed-system gateway servers 13a and 13b assigned the same domain name from the storage device 27, and determines, based on the acquired operational statuses, whether the closed-system gateway servers 13a being the main servers are in a normal operational status (step S31). When each of the closed-system gateway servers 13a is in a normal operational status (Yes in step S31), the closed-system DNS server 14a acquires the list of the main servers by reading addresses of the respective closed-system gateway servers 13a from a non-illustrated memory (step S32).

When an abnormality occurs in each of the closed-system gateway servers 13a (No in step S31), the closed-system DNS server 14a acquires the list of the sub servers by reading addresses of the respective closed-system gateway servers 13b from a non-illustrated memory (step S33).

The closed-system DNS server 14a selects a server from the list of the main servers acquired in step S32 or the list of the sub servers acquired in step S33 (step S34). As an example, the closed-system DNS server 14a selects a server from the list of the main servers or the list of the sub servers based on the round-robin method. The closed-system DNS server 14a also selects a server from the list of the main servers or the list of the sub servers based on the route to the wireless station 41a. Specifically, the closed-system DNS server 14a selects, from the list of the main servers or the list of the sub servers, a server providing the shortest route to the wireless station 41a. After completion of the processing in step S34, the closed-system DNS server 14a ends the server selection processing, and transmits, to the wireless station 41a, a name resolution response including an address of the server selected in step S34.

As described above, the closed-system DNS servers 14a and 14b included in the wireless communication system 2 according to Embodiment 2 select a server from the list of the main servers or the list of the sub servers to perform name resolution. This enables communication among the wireless stations 41a, 41b, and 42 to be continued even when an abnormality occurs in the main servers. As a result, the wireless communication system 2 can have high availability.

In addition to the above-described embodiment, various modifications may be made to the wireless communication system 2 according to Embodiment 2.

First, the number of the closed systems is not limited to the above-described example, and may be any natural number of two or more.

Second, when receiving a name resolution request from the wireless station 41a or 41b, the closed-system DNS server 14a or 14b may identify an address corresponding to a domain name based on the route to the wireless station 41a or 41b. Specifically, the closed-system DNS servers 14a or 14b may select a server providing the shortest route to the wireless station 41a or 41b, more specifically, a server that is included in the closed system 11a or 11b connected to the wireless station 41 or 41b via the closed network 10 and is in a normal operational status. The route to the wireless station 41a or 41b can be identified by identifying, based on the IP address of the wireless station 41a or 41b that is the transmission source IP address of the name resolution request, which of the closed systems 11a and 11b and the cloud system 21 each of the wireless stations 41a, 41b, and 42 is connected to.

The modified examples described in Embodiment 1 are also applicable to Embodiment 2. Specifically, first, the method for selecting, by the closed-system DNS server 14, one of the plurality of closed-system devices corresponding to the domain name included in the name resolution request is not limited to the round-robin method, and may be any method capable of distributing the load based on the operational statuses of the closed-system devices. The same applies to the load balancing device included in the cloud system 21.

Second, the management server 28 may issue a query at regular intervals to each of the closed-system devices and the cloud-system devices to acquire the operational statuses of the closed-system devices and the cloud-system devices. The management server 28 causes the acquired operational statuses of the closed-system devices and the cloud-system devices to be stored in the storage device 27.

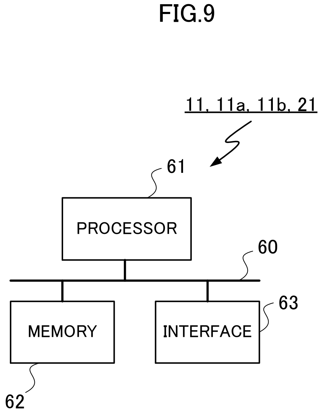

FIG. 9 illustrates an example of a hardware configuration for implementing the above-described wireless communication systems 1 and 2. The closed-system devices included in the closed systems 11, 11a, and 11b and the cloud-system devices included in the cloud system 21 are implemented by a processor 61, a memory 62, and an interface 63. The processor 61, the memory 62, and the interface 63 are connected to one another by a bus 60. The processor 61 includes any electronic circuit or the like including a transistor, and is considered as a circuit or processing circuitry.

For example, the functions of the closed-system devices in the closed systems 11, 11a, and 11b and the cloud-system devices in the cloud system 21 are implemented by software, firmware that is software incorporated in an electronic device, or a combination of software and firmware. The software is described as a program and stored in the memory 62. The processor 61 executes the program stored in the memory 62 to implement the functions of the above-described components. That is, the memory 62 stores the program for performing processing of each of the closed-system devices in the closed systems 11, 11a, and 11b and the cloud-system devices in the cloud system 21.

The memory 62 is, for example, a nonvolatile or volatile semiconductor memory such as a random-access memory (RAM), a read-only memory (ROM), a flash memory, an erasable programmable ROM (EPROM), or an electrically erasable programmable ROM (EEPROM), a magnetic disk, a flexible disk, an optical disc, a compact disc, a minidisc, a digital versatile disc (DVD), or the like.

For example, the interface 63 is a component to connect the closed systems 11, 11a, and 11b to the cloud system 21 or the wireless stations 41, 41a, 41b, and 43, connect the cloud system 21 to the wireless station 42, and establish voice communication. The interface 63 has a plurality of types of interface modules as needed basis.

Although FIG. 9 illustrates one processor 61 and one memory 62, the closed-system devices in the closed systems 11, 11a, and 11b and the cloud-system devices in the cloud system 21 may be implemented by a plurality of processors 61 and a plurality of memories 62. In this configuration, the functions of the devices in the closed systems 11, 11a, and 11b and the cloud system 21 may be implemented by the plurality of processors 61 and the plurality of memories 62 cooperating with one another.

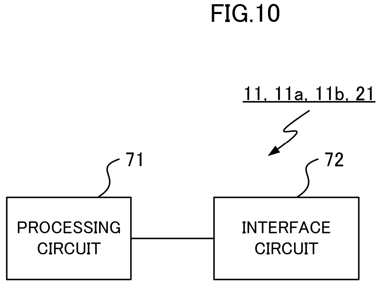

As illustrated in FIG. 10, the devices in the closed systems 11, 11a, and 11b and the cloud system 21 may be implemented by a processing circuit 71. The processing circuit 71 is connected to another device via an interface circuit 72.

When the processing circuit 71 is dedicated hardware, the processing circuit 71 has a single circuit, a composite circuit, a processor, an application specific integrated circuit (ASIC), a field programmable gate array (FPGA), or a combination thereof. The closed-system devices in the closed systems 11, 11a, and 11b and the cloud-system devices in the cloud system 21 may be implemented by any number of processing circuits 71.

A configuration may be employed in which some of the functions of the closed-system devices in the closed systems 11, 11a, and 11b and the cloud-system devices in the cloud system 21 are implemented by the dedicated hardware and the others are implemented by the software or firmware. For example, in the closed system 11, a configuration may be employed in which the call control servers 12, the closed-system gateway servers 13, the closed-system DNS server 14, and the closed-system activation servers 15 are implemented by the processor 61 illustrated in FIG. 9 reading and executing the program stored in the memory 62, and the router 16 and the storage device 17 are implemented by the processing circuit 71 illustrated in FIG. 10.

Additionally, the above-described hardware configurations and flowcharts are only examples and can be changed and modified arbitrarily.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2024-118877, filed on July 24, 2024, the entire disclosure of which is incorporated by reference herein.

### Reference Signs List

1, 2 Wireless communication system
10, 10a, 10b Closed network
11, 11a, 11b Closed system
12, 12a, 12b, 121, 122 Call control server
13, 13a, 13b, 131, 132, 133, 134, 135, 136 Closed-system gateway server
14, 14a, 14b Closed-system DNS server
15, 15a, 15b Closed-system activation server
16, 16a, 16b Router
17, 17a, 17b, 27 Storage device
20 Internet network
21 Cloud system
22 Cloud-system gateway server
23 Cloud-system provisioning server
24 Cloud-system activation server
25 Endpoint device
26, 26a, 26b Dedicated connection device
28 Management server
31 Base station
32 WLAN device
41, 41a, 41b, 42, 43 Wireless station
51 LTE communication circuit
52 WLAN communication circuit
53 Communication control circuit
54 Data processing circuit
55 Input circuit
56 Output circuit
60 Bus
61 Processor
62 Memory
63 Interface
71 Processing circuit
72 Interface circuit

## Claims

1. A wireless communication system including a closed system installed in a closed network and a cloud system installed in an Internet network, the closed system and the cloud system being communicably connected to each other, wherein
the closed system includes
at least one call control server to control communication between a plurality of wireless stations, each of the plurality of wireless stations being connected to the closed network or the Internet network,
a plurality of closed-system gateway servers installed in association with the at least one call control server, the plurality of closed-system gateway servers being configured to retain association between a wireless station of the plurality of wireless stations and a call control server of the at least one call control server, when receiving a registration request or voice data from the wireless station connected to the closed network, transmit the registration request or the voice data to the call control server associated with the wireless station, and when receiving a registration response or voice data from the call control server, transmit the registration response or the voice data to the wireless station being a destination, and
a closed-system domain name system server to, when receiving a name resolution request for a domain name of closed-system devices included in the closed system or cloud-system devices included in the cloud system from the wireless station connected to the closed network, perform name resolution for the domain name included in the name resolution request and transmit, to the wireless station, a name resolution response including an address corresponding to the domain name,
the cloud system includes
a cloud-system gateway server to retain association between a wireless station of the plurality of wireless stations and a call control server of the at least one call control server, when receiving a registration request or voice data from the wireless station connected to the Internet network, transmit the registration request or the voice data to the call control server associated with the wireless station, and when receiving a registration response or voice data destined to the wireless station connected to the Internet network from the call control server, transmit the registration response or the voice data to the wireless station, and
a management server to acquire operational statuses of the closed-system devices, and
when receiving the name resolution request for the closed-system devices, the closed-system domain name system server selects a closed-system device among the closed-system devices corresponding to the domain name in accordance with at least one of the operational statuses of the closed-system devices acquired by the management server or a route to the wireless station connected to the closed network, and transmits, to the wireless station, the name resolution response including an address of the selected closed-system device.

2. The wireless communication system according to claim 1, wherein
closed-system gateway servers of the plurality of closed-system gateway servers associated with a same call control server of the at least one call control server are assigned a same domain name.

3. The wireless communication system according to claim 2, wherein,
when receiving the name resolution request for the plurality of closed-system gateway servers being the closed-system devices from the wireless station connected to the closed network, the closed-system domain name system server selects one of the closed-system gateway servers corresponding to the domain name included in the name resolution request in accordance with at least one of operational statuses of the closed-system gateway servers or the route to the wireless station, and transmits, to the wireless station, the name resolution response including an address of the selected closed-system gateway server.

4. The wireless communication system according to any one of claims 1 to 3, wherein
the closed system further includes, as the closed-system devices, a plurality of closed-system activation servers to, when accepting an activation request from the wireless station connected to the closed network, register activation information in storage devices respectively installed in the closed system and the cloud system, the activation information including unique information for uniquely identifying the wireless station.

5. The wireless communication system according to claim 4, wherein,
when receiving the name resolution request for the plurality of closed-system activation servers being the closed-system devices from the wireless station connected to the closed network, the closed-system domain name system server selects one of closed-system activation servers of the plurality of closed-system activation servers corresponding to the domain name included in the name resolution request in accordance with at least one of operational statuses of the closed-system activation servers or the route to the wireless station, and transmits, to the wireless station, the name resolution response including an address of the selected closed-system activation server.

6. The wireless communication system according to any one of claims 1 to 5, wherein
the wireless communication system includes a plurality of the closed systems to be communicably connected to each other via the cloud system,
for each of the plurality of wireless stations, one of the plurality of closed systems is designated as a main closed system, and the other of the plurality of closed systems is designated as a sub-closed system,
closed-system gateway servers of the plurality of closed-system gateway servers associated with a call control server of the at least one call control server included in the main closed system and closed-system gateway servers of the plurality of closed-system gateway servers associated with a call control server of the at least one call control server included in the sub-closed system are assigned a same domain name, and
when receiving the name resolution request for the plurality of closed-system gateway servers from the wireless station connected to the closed network, the closed-system domain name system server selects one of the closed-system gateway servers assigned the domain name included in the name resolution request in accordance with at least one of an operational status of the call control server associated with the closed-system gateway servers assigned the domain name included in the name resolution request, operational statuses of the closed-system gateway servers, or the route to the wireless station.

7. The wireless communication system according to claim 6, wherein,
when the call control server included in the main closed system is in a normal operational status, the closed-system domain name system server selects one of closed-system gateway servers of the plurality of closed-system gateway servers included in the main closed system and assigned the domain name included in the name resolution request in accordance with at least one of operational statuses of the closed-system gateway servers associated with the call control server included in the main closed system or the route to the wireless station connected to the closed network and when the call control server included in the main closed system is in an abnormal operational status, the closed-system domain name system server selects one of closed-system gateway servers of the plurality of closed-system gateway servers included in the sub-closed system and assigned the domain name included in the name resolution request in accordance with at least one of operational statuses of the closed-system gateway servers associated with the call control server included in the sub-closed system or the route to the wireless station.

8. The wireless communication system according to claim 6 or 7, wherein
the closed system further includes, as the closed-system devices, a plurality of closed-system activation servers to, when accepting an activation request from the wireless station connected to the closed network, register activation information in storage devices respectively installed in the closed system and the cloud system, the activation information including unique information for uniquely identifying the wireless station,
at least one of closed-system activation servers of the plurality of closed-system activation servers included in the main closed system and at least one of closed-system activation servers of the plurality of closed-system activation servers included in the sub-closed system are assigned a same domain name, and
when receiving the name resolution request for the plurality of closed-system activation servers from the wireless station connected to the closed network, the closed-system domain name system server selects one of closed-system activation servers of the plurality of closed-system activation servers assigned the domain name included in the name resolution request in accordance with at least one of operational statuses of the closed-system activation servers assigned the domain name included in the name resolution request or the route to the wireless station.

9. The wireless communication system according to claim 8, wherein,
when at least one of the closed-system activation servers included in the main closed system is in a normal operational status, the closed-system domain name system server selects one of closed-system activation servers of the plurality of closed-system activation servers included in the main closed system and assigned the domain name included in the name resolution request in accordance with at least one of operational statuses of the closed-system activation servers included in the main closed system or the route to the wireless station connected to the closed system, and when the closed-system activation servers included in the main closed system are in an abnormal operational status, the closed-system domain name system server selects one of closed-system activation servers of the plurality of closed-system activation servers included in the sub-closed system and assigned the domain name included in the name resolution request in accordance with at least one of operational statuses of the closed-system activation servers included in the sub-closed system or the route to the wireless station.

10. A communication method to be executed by a wireless communication system, the wireless communication system including a closed system installed in a closed network and a cloud system installed in an Internet network, the closed system and the cloud system being communicably connected to each other, the closed system including at least one call control server, a plurality of closed-system gateway servers, and a plurality of closed-system domain name system servers, the at least one call control server being configured to control communication between a plurality of wireless stations each connected to the closed network or the Internet network, the plurality of closed-system gateway servers being installed in association with the at least one call control server and being configured to retain association between a wireless station of the plurality of wireless stations and a call control server of the at least one call control server, the plurality of closed-system domain name system servers being configured to perform name resolution for a domain name of closed-system devices included in the closed system or cloud-system devices included in the cloud system, the cloud system including a cloud-system gateway server and a management server, the cloud-system gateway server being configured to retain association between a wireless station of the plurality of wireless stations and a call control server of the at least one call control server, the management server being configured to acquire operational statuses of the closed-system devices, the communication method comprising:
by the plurality of closed-system gateway server,
in response to receiving a registration request or voice data from the wireless station connected to the closed network, transmitting the registration request or the voice data to the call control server associated with the wireless station, and in response to receiving a registration response or voice data from the call control server, transmitting the registration response or the voice data to the wireless station being a destination;
by the closed-system domain name system server,
in response to receiving a name resolution request for a domain name of the closed-system devices included in the closed system or the cloud-system devices included in the cloud system from the wireless station connected to the closed network, performing name resolution for the domain name included in the name resolution request and transmitting, to the wireless station, a name resolution response including an address corresponding to the domain name;
by the cloud-system gateway server,
in response to receiving a registration request or voice data from the wireless station connected to the Internet network, transmitting the registration request or the voice data to the call control server associated with the wireless station, and in response to receiving a registration response or voice data destined to the wireless station connected to the Internet network from the call control server, transmitting the registration response or the voice data to the wireless station; and
by the closed-system domain name system server,
in response to receiving the name resolution request for the closed-system devices, selecting a closed-system device among the closed-system devices corresponding to the domain name in accordance with at least one of the acquired operational statuses of the closed-system devices or a route to the wireless station connected to the closed network, and transmitting, to the wireless station, the name resolution response including an address of the selected closed-system device.
